# EUROPÄISCHE PATENTSCHRIFT

(11) **EP 0 926 790 B1**
(45) Veröffentlichungstag und Bekanntmachung des Hinweises auf die Patenterteilung: **22.11.2006**
(21) Anmeldenummer: 98123630.0
(22) Anmeldetag: 10.12.1998
(51) Int. Cl.: H02B 1/21

(54) **Adapter mit Basisgehäuse für ein Sammelschienensystem mit einer Anzahl von Stromsammelschienen**
Adapter having a base housing for a busbar system with a number of busbars
Adaptateur avec un boîtier de base pour un jeu de barres omnibus avec plusieurs barres de distribution de courant

(30) Priorität: 15.12.1997 DE 19755844
(43) Veröffentlichungstag der Anmeldung: 30.06.1999
(73) Patentinhaber: Rittal-Werk Rudolf Loh GmbH & Co. KG, 35745 Herborn (DE)
(72) Erfinder: Wagener, Hans, 35716 Dietzhölztal 2 (DE)
(74) Vertreter: Fleck, Hermann-Joseph

(56) Entgegenhaltungen:
- EP-A- 0 349 782
- DE-U- 9 219 080
- DE-U- 29 501 277

## Beschreibung

Die Erfindung betrifft einen Adapter mit einem Basisgehäuse, an dem entsprechend der Anzahl der Stromsammelschienen eines Sammelschienensystems Einhängehaken angebracht sind, die entsprechend dem Abstand der Stromsammelschienen in Längsrichtung des Basisgehäuses gegeneinander versetzt und über in die Oberseite des Basisgehäuses längsgerichtet eingeformte Aufnahmen für den Einsatz von Verbindungskontakten zugänglich sind.

Ein Adapter dieser Art ist aus EP 0 642 197 A bekannt geworden.

Bei den bekannten Adaptern dieser Art bereitet die Montage der Verbindungskontakte im Basisgehäuse erhebliche Schwierigkeiten, da zum einen sichergestellt sein muß, daß eine eindeutige elektrische Verbindung zwischen Kontaktschiene und Verbindungskontakt sichergestellt sein muß und zum anderen, daß nach dem Einhängen des Adapters der Verbindungskontakt im Bereich des Einhängehakens auch eine eindeutige elektrische Verbindung zur Stromsammelschiene herstellt.

Es ist Aufgabe der Erfindung, einen Adapter der eingangs erwähnten Art zu schaffen, bei dem mit einfachen Montagemaßnahmen die Verbindungskontakte in das Basisgehäuse eingebracht werden können und dann eine elektrisch bedingte Verbindung zur zugeordneten Kontaktschiene und zugeordneten Stromsammelschiene sicherstellen.

Diese Aufgabe wird nach der Erfindung dadurch gelöst, daß im Bereich der Einhängehaken die Kontaktschienen-Aufnahmen Rastaufnahmen für mit Rastfedern versehene Kontaktträger aufweisen, in denen S-förmige Verbindungskontakte mit rechtwinklig zueinander stehenden Abschnitten gehalten sind, daß die Kontaktträger mit den Verbindungskontakten in den Rastaufnahmen unter Federspannung begrenzt vertikal verstellbar sind, daß der obere Endabschnitt des Verbindungskontaktes in einer auf die Kontaktschienen-Aufnahme ausgerichteten Kammer des Kontaktträgers eingeführt ist, die zusätzlich Platz zum Einführen einer Kontaktschiene bietet, und daß der untere Endabschnitt des Verbindungskontaktes in einer der Unterseite des Basisgehäuses zugekehrten Aufnahme gehalten ist und mit einer Kontaktstelle aus dieser Aufnahme ragt.

Bei dieser Ausgestaltung bilden der Kontaktträger mit einem Federelement und dem so abgewinkelten Verbindungskontakt eine vorbereitend montierte Einheit, die nur noch in die Rastaufnahme des Basisgehäuses eingerastet werden muß.

Dabei gelangt der untere Endabschnitt des Verbindungskontaktes automatisch in die im Einhängehaken vorgesehene Aufnahme, aus der dieser mit der Kontaktstelle herausragt. Die Kammer im Kontaktträger bietet Platz für die zugeordnete Kontaktschiene, welche mit ihrem Ende einfach über dem oberen Endabschnitt des Verbindungskontaktes eingeführt wird und dabei für eine eindeutige elektrische Verbindung zwischen Kontaktschiene und Verbindungskontakt sorgt, wenn unter der Federspannung der obere Endabschnitt des Verbindungskontaktes gegen die eingeführte Kontaktschiene gedrückt wird. Der untere Endabschnitt des Verbindungskontaktes ist federnd und legt sich unter Spannung an die eingeführte Stromsammelschiene, die sich mit ihrer Oberseite an dem mittleren Abschnitt des Verbindungskontaktes abstützt. Damit steht auch die Stromsammelschiene nach dem Einhängen des Adapters in eindeutiger elektrischer Verbindung mit dem Verbindungskontakt.

Ist nach einer Ausgestaltung vorgesehen, daß die Aufnahme im Einhängehaken ebenfalls als Rastaufnahme mit dem stirnseitigen Ende des unteren Endabschnittes des Verbindungskontaktes zugekehrten Rastansatz ausgebildet ist, dann wird der untere Endabschnitt im Einhängehaken positioniert gehalten.

Zum leichten Entformen der Rastansätze an den Einhängehaken ist vorgesehen, daß der Einhängehaken unterhalb des Rastansatzes mit einem Durchbruch versehen ist.

Die Kontaktstelle des unteren Endabschnittes des Verbindungskontaktes ist durch ein V-förmiges Hochbiegen gebildet.

Der Rastsitz des Kontaktträgers in der Rastaufnahme des Basisgehäuses wird dadurch erreicht, daß der Kontaktträger an den parallel zu den Kontaktschienen-Aufnahmen ausgerichteten Seiten jeweils zwei Rastfedern mit nach außen gerichteten Rastansätzen trägt, die in vertikalen Nuten der Rastaufnahme des Basisgehäuses geführt und im Bereich der Unterseite des Basisgehäuses mit den Rastansätzen diese hintergreifen oder in Rastaufnahmen des Basisgehäuses einrasten, wobei die Rastaufnahmen die erforderliche, begrenzte Vertikalverstellung des Kontaktträgers zulassen.

Ist nach einer Ausgestaltung vorgesehen, daß die die Kammer des Kontaktträgers nach oben abschließende Deckwand in Längsrichtung der Kontaktschienen-Aufnahmen in zwei Haltestege unterteilt ist, dann ist der Verbindungskontakt auch von der Oberseite des Kontaktträgers aus zugänglich, so daß Geräteanschlüsse von auf dem Basisgehäuse angeordneten Schaltgeräten direkt mit den Verbindungskontakten in elektrisch leitende Verbindung gebracht werden können.

Der Einbau und die Abstützung eines Federelementes in die Einheit aus Kontaktträger und Verbindungskontakt ist nach einer Ausgestaltung so gelöst, daß der die Kammer nach unten abschließende Teil des Kontaktträgers dem Einhängehaken zugekehrt eine Sacklochbohrung für eine Schraubenfeder aufweist, die sich mit dem unteren Ende auf der Oberseite des mittleren Abschnittes des Verbindungskontaktes abstützt.

Bildet die Stromsammelschiene mit dem Verbindungskontakt einen festen Bezugspunkt, dann drückt die Schraubenfeder den Kontaktträger nach oben, d.h. den oberen Endabschnitt des Verbindungskontaktes an die in die Kammer eingeführte Kontaktschiene oder einen anliegenden Geräteanschluß.

Damit der sich senkrecht an den oberen Endabschnitt anschließende Abschnitt des Verbindungskontaktes in der Rastaufnahme des Basisgehäuses ausreichend Platz findet, ist vorgesehen, daß der Teil des Kontaktträgers quaderförmig ausgebildet ist und an seinen senkrecht zu den Kontaktschienen-Aufnahmen stehenden Seiten jeweils um die Dicke des senkrecht an den oberen Endabschnitt anschließenden Abschnittes des Verbindungskontaktes gegenüber den zugekehrten Seiten der Rastaufnahme zurückgesetzt sind. Dies hat zudem den Vorteil, daß der Kontaktträger in zwei um 180° verdrehten Stellungen in die Rastaufnahme des Basisgehäuses einrastbar ist.

Mit einer Ausgestaltung, die dadurch gekennzeichnet ist, daß der an den unteren Endabschnitt an der die Aufnahme abschließende Abschnitt des Verbindungskontaktes an der die Aufnahme abschließenden vertikalen Wand des Einhängehakens anliegt, wird die Führung des Verbindungskontaktes im Bereich des Einhängehakens verbessert.

Die Erfindung wird anhand eines in der Zeichnung dargestellten Ausführungsbeispiels näher erläutert. Es zeigen:
Fig. 1 einen vergrößerten Teilschnitt durch das Basisgehäuse eines Adapters mit der in eine Rastaufnahme eingesetzten Einheit aus Kontaktträger und Verbindungskontakt,
Fig. 2 bis 4 drei Ansichten des Kontaktträgers und
Fig. 5 bis 7 drei Ansichten des S-förmigen Verbindungskontaktes.

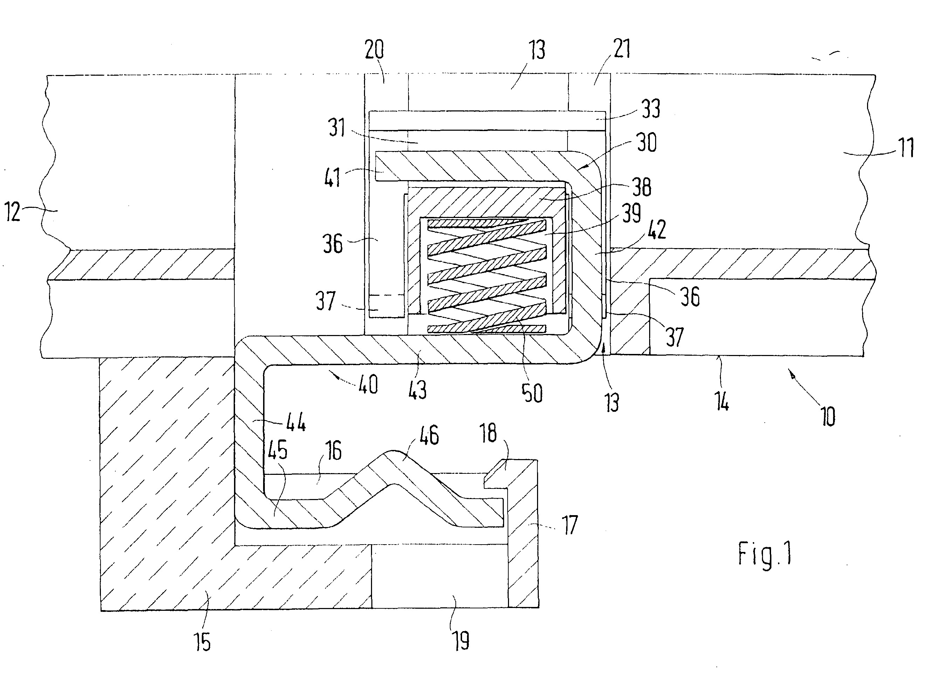

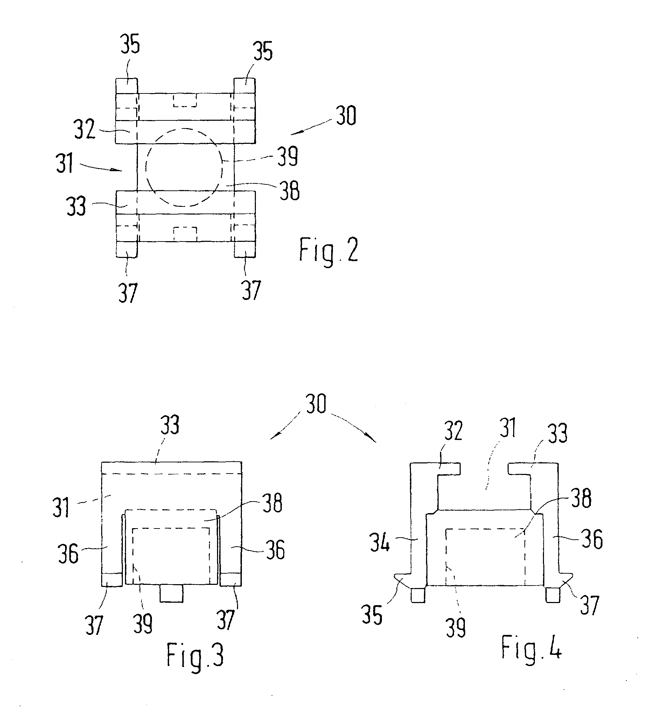

Der Grundaufbau des Basisgehäuses 10 richtet sich in bekannter Weise nach der Anzahl und dem Abstand der Stromsammelschienen im Sammelschienensystem. In die Oberseite des Basisgehäuses 10 sind entsprechend längsgerichtete Kontaktschienen-Aufnahmen eingeformt, die, wie Fig. 1 erkennen läßt, mit den Abschnitten 11 und 12 im Bereich der angeformten Einhängehaken 15 des Basisgehäuses 10 in eine Rastaufnahme 13 münden. Diese Rastaufnahme 13 hat an den parallel zu den Kontaktschienen-Aufnahmen 11, 12 ausgerichteten Seiten eingeformte, vertikale Führungsnuten 20 und 21 für an einem Kontaktträger 30 nach Fig. 2 bis 4 angeformte Rastfeder-Paaren 34 und 36 mit nach außen gerichteten Rastansätzen 35 und 37. Die Wände der Rastaufnahme 13 mit den Führungsnuten 20 und 21 tragen Rastaufnahmen, in die die Rastansätze 35 und 37 einrasten, jedoch eine begrenzte vertikale Verstellung des Kontaktträgers 30 in der Rastaufnahme 13 zulassen. Die Rastfedern 34 und 36 können mit ihren Rastansätzen 35 und 37 auch an der Unterseite 14 das Basisgehäuse 10 hintergreifen und so die obere Endstellung des Kontaktträgers 30 festlegen.

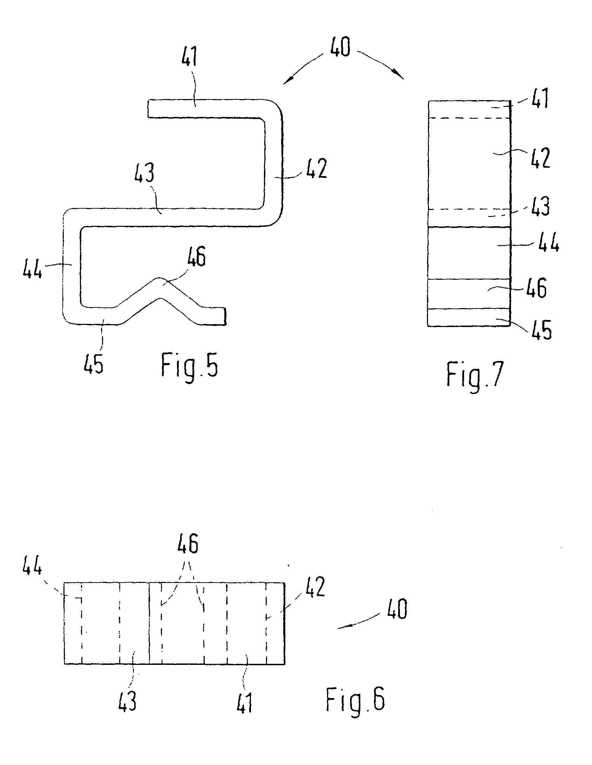

Bevor der Kontaktträger 30 in die Rastaufnahme 13 eingerastet wird, wird der S-förmige Verbindungskontakt 40 nach den Fig. 5 bis 7 und das als Schraubenfeder ausgebildete Federelement 50 zu einer vorgefertigten Einheit montiert. Der Kontaktträger 30 hat im oberen Bereich eine in Längsrichtung der Kontaktschienen-Aufnahme 11, 12 ausgerichtete Kammer 31, die von zwei Haltestegen 32 und 33 nach oben abgeschlossen ist. Diese Haltestege 32 und 33 sind, wie Fig. 4 zeigt, in Längsrichtung der Kontaktschienen-Aufnahme 11, 12 ausgerichtet und bieten von der Oberseite des Basisgehäuse 10 aus einen Zugang zur Kammer 31, in die der obere Endabschnitt 41 des Verbindungskontaktes 40 eingeführt ist. Im unteren Teil 38 des Kontaktträgers 30, der quaderförmig ausgebildet ist, ist eine Sacklochbohrung 39 eingebracht, die eine Schraubenfeder als Federelement 50 aufnimmt. Alle Abschnitte 41 bis 45 des Verbindungskontaktes 40 sind rechtwinklig zueinander abgekantet, so daß die Abschnitte 41, 42 und 43 den Teil 38 des Kontaktträgers 30 an drei Seiten umschließen. Damit der Abschnitt 42 des Verbindungskontaktes 40 in der Rastaufnahme 13 Platz hat, ist der Teil 39 des Kontaktträgers 30 an beiden, senkrecht zu den Kontaktschienen-Aufnahmen 11 und 12 stehenden Seiten gegenüber den zugekehrten Seiten der Rastaufnahme 13 um die Dicke des Abschnittes 42, d.h. der Dicke des Verbindungskontaktmaterials, zurückgesetzt, wie Fig. 2 erkennen läßt. Der Kontaktkörper 30 ist daher symmetrisch und kann in zwei um 180° verdrehten Stellungen eingesetzt werden. Die Sacklochbohrung 39 im Teil 38 ist zum mittleren Abschnitt 43 des Verbindungskontaktes 40 hin offen, so daß die eingesetzte Schraubenfeder sich an dem Teil 38 des Kontaktträgers 30 und dem mittleren Abschnitt 43 des Verbindungskontaktes 40 abstützt.

Der Verbindungskontakt 40 wird nach dem Einrasten des Kontaktträgers 30 in die Rastaufnahme 13 mit dem Abschnitt 44 an der zugekehrten Seite des Einhängehakens 15 geführt und der untere Endabschnitt 45 mit der V-förmig hochgebogenen Kontaktstelle 46 in die Aufnahme 16 im Einhängehaken 15 eingeführt und eingerastet. Damit ist der Verbindungskontakt 40 im Einhängehaken 15 eindeutig gehalten und positioniert. Der Rastansatz 18 am freien Ende 17 des Einhängehakens 15 sichert den unteren Endabschnitt 45 des Verbindungskontaktes 40 nach oben. Über den Durchbruch 19 im Einhängehaken 15 wird die Entformung des Rastansatzes 18 erleichtert. Der untere Endabschnitt 45 ragt mit der Kontaktstelle 46 aus der Aufnahme 16 des Einhängehakens 15 und steht in einem Abstand zur Unterseite des mittleren Abschnittes 43 des Verbindungskontaktes 40, der kleiner ist als die Dicke der Stromsammelschiene, an der der Adapter festgelegt wird. Der untere Endabschnitt 45 kann beim Einführen der Stromsammelschiene ausweichen und legt sich unter Spannung an diese an, um einen eindeutigen elektrischen Kontakt zwischen Stromsammelschiene und Verbindungskontakt 40 herzustellen. Die Schraubenfeder drückt den Kontaktkörper 30 weit nach oben, da der eingeführte obere Endabschnitt 41 des Verbindungskontaktes 40 an die darüber in der Kammer 31 befindliche Kontaktschiene angedrückt wird, um auch eine eindeutige elektrische Verbindung zwischen dem Verbindungskontakt 40 und der Kontaktschiene herzustellen.

## Patentansprüche

1. Adapter mit einem Basisgehäuse (10), an dem entsprechend der Anzahl der Stromsammelschienen eines Sammelschienensystems Einhängehaken angebracht sind, die entsprechend dem Abstand der Stromsammelschienen in Längsrichtung des Basisgehäuses (10) gegeneinander versetzt und über in die Oberseite des Basisgehäuses längsgerichtet eingeformte Kontaktschienen-Aufnahmen (11,12) für den Einsatz von Verbindungskontakten (40) zugänglich sind, welche die Kontaktschienen mit den Stromsammelschienen verbinden,
**dadurch gekennzeichnet,**
**daß** im Bereich der Einhängehaken (15) die Kontaktschienen-Aufnahmen (11,12) Rastaufnahmen (13) für mit Rastfedern (34,36) versehene Kontaktträger (30) aufweisen, in denen S-förmige Verbindungskontakte (40) mit rechtwinklig zueinander stehenden Abschnitten (41 bis 45) gehalten sind,
**daß** die Kontaktträger (30) mit den Verbindungskontakten (40) in den Rastaufnahmen (13) unter Federspannung begrenzt vertikal verstellbar sind,
**daß** der obere Endabschnitt (41) des Verbindungskontaktes (40) in einer auf die Kontaktschienen-Aufnahme (11, 12) ausgerichteten Kammer (31) des Kontaktträgers (30) eingeführt ist, die zusätzlich Platz zum Einführen einer Kontaktschiene bietet, und
**daß** der untere Endabschnitt (45) des Verbindungskontaktes (40) in einer der Unterseite (14) des Basisgehäuses (10) zugekehrten Aufnahme (16) gehalten ist und mit einer Kontaktstelle (46) aus dieser Aufnahme (16) ragt.

2. Adapter nach Anspruch 1,
**dadurch gekennzeichnet,**
**daß** die Aufnahme (16) im Einhängehaken (15) ebenfalls als Rastaufnahme mit dem stirnseitigen Ende des unteren Endabschnittes (45) des Verbindungskontaktes (40) zugekehrtem Rastansatz (18) ausgebildet ist.

3. Adapter nach Anspruch 2,
**dadurch gekennzeichnet,**
**daß** der Einhängehaken (15) unterhalb des Rastansatzes (18) mit einem Durchbruch (19) versehen ist.

4. Adapter nach einem der Ansprüche 1 bis 3,
**dadurch gekennzeichnet,**
**daß** der untere Endabschnitt (45) des Verbindungskontaktes (40) zur Bildung der Kontaktstelle (46) V-förmig hochgebogen ist.

5. Adapter nach einem der Ansprüche 1 bis 4,
**dadurch gekennzeichnet,**
**daß** der Kontaktträger (30) an den parallel zu den Kontaktschienen-Aufnahmen (11, 12) ausgerichteten Seiten jeweils zwei Rastfedern (34, 36) mit nach außen gerichteten Rastansätzen (45, 47) trägt, die in vertikalen Nuten (20, 21) der Rastaufnahme (13) des Basisgehäuses (10) geführt und im Bereich der Unterseite (14) des Basisgehäuses (10) mit den Rastansätzen (35,37) diese hintergreifen oder in Rastaufnahmen des Basisgehäuses (10) einrasten.

6. Adapter nach einem der Ansprüche 1 bis 5,
**dadurch gekennzeichnet,**
**daß** die die Kammer (31) des Kontaktträgers (30) nach oben abschließende Deckwand in Längsrichtung der Kontaktschienen-Aufnahmen (11, 12) in zwei Haltestege (32, 33) unterteilt ist.

7. Adapter nach einem der Ansprüche 1 bis 6,
**dadurch gekennzeichnet,**
**daß** der die Kammer (31) nach unten abschließende Teil (38) des Kontaktträgers (30) dem Einhängehaken (15) zugekehrt eine Sacklochbohrung (39) für eine Schraubenfeder (50) aufweist, die sich mit dem unteren Ende auf der Oberseite des mittleren Abschnittes (43) des Verbindungskontaktes (40) abstützt.

8. Adapter nach Anspruch 7,
**dadurch gekennzeichnet,**
**daß** der Teil (38) des Kontaktträgers (30) quaderförmig ausgebildet ist und an seinen senkrecht zu den Kontaktschienen-Aufnahmen (11, 12) stehenden Seiten jeweils um die Dicke des senkrecht an den oberen Endabschnitt (41) anschließenden Abschnittes (42) des Verbindungskontaktes (40) gegenüber den zugekehrten Seiten der Rastaufnahme (13) zurückgesetzt sind.

9. Adapter nach einem der Ansprüche 1 bis 8,
**dadurch gekennzeichnet,**
**daß** der an den unteren Endabschnitt (45) an der die Aufnahme (16) abschließende Abschnitt (44) des Verbindungskontaktes (40) an der die Aufnahme (16) abschließenden vertikalen Wand des Einhängehakens (15) anliegt.

## Claims

1. Adapter having a base housing (10), to which suspension hooks are fitted corresponding to the number of busbars in a busbar system, which suspension hooks are offset with respect to one another in the longitudinal direction of the base housing (10) corresponding to the distance between the busbars and are accessible via contact rail receptacles (11, 12), which are formed lengthwise into the upper side of the base housing, for inserting connection contacts (40) which connect the contact rails to the busbars, **characterized in that** the contact rail receptacles (11, 12) have latching receptacles (13) in the region of the suspension hooks (15) for contact carriers (30) provided with latching springs (34, 36), S-shaped connection contacts (40) with sections (41 to 45) which are at right angles with respect to one another being held in said contact carriers (30), **in that** the contact carriers (30) with the connection contacts (40) in the latching receptacles (13) can be adjusted vertically to a limited extent with spring tension, **in that** the upper end section (41) of the connection contact (40) is inserted into a chamber (31) of the contact carrier (30), which chamber (31) is aligned with the contact rail receptacle (11, 12) and also provides space for inserting a contact rail, and **in that** the lower end section (45) of the connection contact (40) is held in a receptacle (16), which faces the underside (14) of the base housing (10), and protrudes with a contact point (46) out of this receptacle (16).

2. Adapter according to Claim 1, **characterized in that** the receptacle (16) in the suspension hook (15) is likewise in the form of a latching receptacle with a latching attachment (18) which faces the end-side end of the lower end section (45) of the connection contact (40).

3. Adapter according to Claim 2, **characterized in that** the suspension hook (15) is provided with an aperture (19) beneath the latching attachment (18).

4. Adapter according to one of Claims 1 to 3, **characterized in that** the lower end section (45) of the connection contact (40) is bent up in the form of a V so as to form the contact point (46).

5. Adapter according to one of Claims 1 to 4, **characterized in that** the contact carrier (30) bears in each case two latching springs (34, 36) with outwardly pointing latching attachments (35, 37) on those sides which are aligned parallel to the contact rail receptacles (11, 12), which latching springs (34, 36) are guided in vertical grooves (20, 21) of the latching receptacle (13) of the base housing (10) and, in the region of the underside (14) of the base housing (10), engage behind said underside (14) with the latching attachments (35, 37) or latch into latching receptacles of the base housing (10).

6. Adapter according to one of Claims 1 to 5, **characterized in that** the cover wall, which closes off the chamber (31) of the contact carrier (30) at the top, is split into two holding webs (32, 33) in the longitudinal direction of the contact rail receptacles (11, 12).

7. Adapter according to one of Claims 1 to 6, **characterized in that that** part (38) of the contact carrier (30) which closes off the chamber (31) at the bottom has, facing the suspension hook (15), a blind hole (39) for a helical spring (50), which is supported with its lower end on the upper side of the central section (43) of the connection contact (40).

8. Adapter according to Claim 7, **characterized in that** the part (38) of the contact carrier (30) is parallelepipedal and, on its sides which are perpendicular to the contact rail receptacles (11, 12), is set back with respect to the facing sides of the latching receptacle (13), in each case by the thickness of that section (42) of the connection contact (40) which perpendicularly adjoins the upper end section (41).

9. Adapter according to one of Claims 1 to 8, **characterized in that that** section (44) of the connection contact (40) which closes off the receptacle (16) at the lower end section (45) bears against the vertical wall of the suspension hook (15), which vertical wall closes off the receptacle (16).

## Revendications

1. Adaptateur à boîtier de base (10) sur lequel sont installés, en fonction du nombre de barres de distribution de courant d'un jeu de barres omnibus, des crochets d'accrochage qui sont décalés les uns par rapport aux autres en fonction de la distance entre les barres de distribution de courant dans le sens longitudinal du boîtier de base (10) et accessibles par le biais de récepteurs de barres de contact (11, 12) creusés dans la face supérieure du boîtier de base en orientation longitudinale pour y insérer des contacts de connexion (40) qui relient les barres de contact aux barres de distribution de courant,
**caractérisé en ce que**,
au niveau des crochets d'accrochage (15), les récepteurs de barres de contact (11, 12) comportent des supports d'enclenchement (13) pour des supports de contact (30) équipés de ressorts d'enclenchement (34, 36) dans lesquels des contacts de connexion en forme de S (40) ayant des sections (41 à 45) mutuellement orthogonales sont maintenus,
**en ce que** les supports de contact (30) comprenant les contacts de liaison (40) sont réglables verticalement de manière limitée dans les supports d'enclenchement (13) sous tension de ressort,
**en ce que** la section terminale supérieure (41) du contact de connexion (40) est introduite dans une chambre (31) du support de contact (30) alignée sur le récepteur de barres de contact (11, 12) et qui offre de la place supplémentaire pour l'introduction d'une barre de contact et
**en ce que** la section terminale inférieure (45) du contact de connexion (40) est maintenue dans un récepteur (16) tourné vers la face inférieure (14) du boîtier de base (10) et dépasse par un point de contact (46) de ce récepteur (16).

2. Adaptateur selon la revendication 1,
**caractérisé en ce que**
le récepteur (16) du crochet d'accrochage (15) est réalisé également sous forme de support d'enclenchement avec le talon d'enclenchement (18) tourné vers l'extrémité frontale de la section terminale inférieure (45) du contact de connexion (40) .

3. Adaptateur selon 1a revendication 2,
**caractérisé en ce que**
le crochet d'accrochage (15) est pourvu d'une percée (19) sous le talon d'enclenchement (18).

4. Adaptateur selon l'une quelconque des revendications 1 à 3,
**caractérisé en ce que**
la section terminale inférieure (45) du contact de connexion (40) est recourbée vers le haut en forme de V pour former le point de contact (46).

5. Adaptateur selon l'une quelconque des revendications 1 à 4,
**caractérisé en ce que**
le support de contact (30) supporte, sur ses côtés orientés parallèlement aux récepteurs de barre de contact (11, 12), respectivement deux ressorts d'enclenchement (34, 36) avec des talons d'enclenchement (45, 47) orientés vers l'extérieur qui sont guidés dans des rainures verticales (20, 21) du support d'enclenchement (13) du boîtier de base (10) et, au niveau de la face inférieure (14) du boîtier de base (10) comportant les talons de base (35, 37), tiennent ceux-ci par derrière ou s'enclenchent dans des supports d'enclenchement du boîtier de base (10).

6. Adaptateur selon l'une quelconque des revendications 1 à 5,
**caractérisé en ce que**
la paroi de couverture terminant par le haut la chambre (31) du support de contact (30) est subdivisée en deux traverses de retenue (32, 33) dans le sens longitudinal des récepteurs de barres de contact (11, 12).

7. Adaptateur selon l'une quelconque des revendications 1 à 6,
**caractérisé en ce que**
la pièce (38) terminant par le bas la chambre (31) du support de contact (30) présente un alésage borgne (39) tourné vers le crochet d'accrochage (15) pour un ressort à hélice (50) s'appuyant par son extrémité inférieure sur la face supérieure de la section centrale (43) du contact de connexion (40).

8. Adaptateur selon la revendication 7,
**caractérisé en ce que**
la pièce (38) du support de contact (30) a une conformation rectangulaire et que ses côtés placés perpendiculairement aux récepteurs de barre de contact (11, 12) sont reculés respectivement à raison de l'épaisseur de la section (42) se raccordant verticalement à la section terminale supérieure (41) du contact de connexion (40) par rapport aux côtés tournés vers eux du support d'enclenchement (13).

9. Adaptateur selon l'une quelconque des revendications 1 à 8,
**caractérisé en ce que**
la section (44) du contact de connexion (40) terminant le récepteur (16) au niveau de la section terminale inférieure (45) touche la paroi verticale terminant le récepteur (16) du crochet d'accrochage (15).
